# EUROPEAN PATENT APPLICATION

(11) **EP 3 332 905 A1**
(43) Date of publication of application: **13.06.2018**
(21) Application number: 17001954.1
(22) Date of filing: 29.11.2017
(51) Int. Cl.: B23K 26/342, B23K 9/04, B23K 10/02, B23K 11/00, B23K 15/00, B22F 3/105, B33Y 10/00, B33Y 30/00, B29C 64/10

(54) **METAL ADDITIVE SYSTEM**

(30) Priority: 29.11.2016 US 201615363067
(71) Applicant: Lincoln Global, Inc., Santa Fe Springs, CA 90670 (US)
(72) Inventor: Narayanan, Badri K., Mayfield Heights, OH 44124 (US); Kottman, Michael, Cleveland, OH 44113 (US)
(74) Representative: Grosse Schumacher Knauer von Hirschhausen

(57) **Abstract**

A method for three-dimensional printing includes depositing, via a first metal deposition device (120), first metal on a base (110) along a first path and simultaneously depositing, via a second metal deposition device (130), second metal on the base (110) along a second path to form a three-dimensional structure. The three-dimensional structure includes the first metal along the first path and the second metal along the second path. A first end of the first path Is adjacent to a first end of the second path. The first metal deposition device (120) moves independently from the second metal deposition device (130).

## Description

### FIELD OF THE INVENTION

The invention is related to a method for three-dimensional printing according to claim 1 and to a three-dimensional printing device according to claim 7. The following description is provided to assist the understanding of the reader. None of the information provided or references cited is admitted to be prior art.

### TECHNICAL BACKGROUND

Three-dimensional printing techniques can be used to manufacture objects. For example, plastic can be extruded in patterns that form multiple layers of a three-dimensional object. In some instances, heat generated during the printing process may cause issues with the integrity of the object. For example, high heat generated during metal deposition (e.g., welding) can deform the metal and create internal stresses or fractures.

### DESCRIPTION

In order to improve three-dimensional printing a method according to claim 1 is described and a printing device according to claim 7. Preferred embodiments are subject of the subclaims. An illustrative method for three-dimensional printing includes depositing, via a first metal deposition device, first metal on a base along a first path and simultaneously depositing, via a second metal deposition device, second metal on the base along a second path to form a three-dimensional structure. The three-dimensional structure includes the first metal along the first path and the second metal along the second path. A first end of the first path is adjacent to a first end of the second path. The first metal deposition device moves independently from the second metal deposition device.

An illustrative three-dimensional printing device includes a first metal deposition device configured to deposit first metal on a base and a second metal deposition device configured to deposit second metal on the base. The first metal deposition device moves independently from the second metal deposition device. The three-dimensional printing device also includes a controller operatively coupled to the first metal deposition device and the second metal deposition device. The controller is configured to cause the first metal deposition device to deposit the first metal along a first path and to simultaneously cause the second metal deposition device to deposit the second metal along a second path to form a three-dimensional structure. The three-dimensional structure includes the first metal along the first path and the second metal along the second path. A first end of the first path is adjacent to a first end of the second path.

The foregoing summary is illustrative only and is not intended to be in any way limiting. In addition to the illustrative aspects, embodiments, and features described above, further aspects, embodiments, and features will become apparent by reference to the following drawings and the detailed description.

### BRIEF DESCRIPTION OF THE DRAWINGS

Figure 1 is a block diagram of a three-dimensional printing system with multiple deposition devices in accordance with an illustrative embodiment.
Figure 2A is a diagram illustrating a deposition path of a three-dimensional printing system in accordance with an illustrative embodiment.
Figure 2B is an elevation view of a three-dimensionally printed object printed using the deposition path of Figure 2A in accordance with an illustrative embodiment.
Figure 3A is a diagram illustrating two deposition paths of a three-dimensional printing system with multiple deposition devices in accordance with an illustrative embodiment.
Figure 3B is an elevation view of a three-dimensionally printed object printed using the deposition paths of Figure 3A in accordance with an illustrative embodiment.
Figure 4A is a diagram illustrating two deposition paths of a three-dimensional printing system with multiple deposition devices in accordance with an illustrative embodiment.
Figure 4B is an elevation view of a three-dimensionally printed object printed using the deposition paths of Figure 4A in accordance with an illustrative embodiment.
Figure 5 is a flow diagram of a method of producing a three-dimensional object in accordance with an illustrative embodiment.
Figures 5A and 5B are diagrams illustrating multiple deposition paths of a three-dimensional printing system with a single deposition device in accordance with an illustrative embodiment.
Figure 6 is a block diagram of a computing device in accordance with an illustrative embodiment.
Figures 6A and 6B are diagrams illustrating multiple deposition paths of a three-dimensional printing system with multiple deposition devices in accordance with an illustrative embodiment.
Figure 7 is a graph showing distortion of the base using the deposition paths of Figures 5A, 5B, 6A, and 6B in accordance with an illustrative embodiment.
Figure 8 is a diagram illustrating multiple, mirrored deposition paths of a three-dimensional printing system with multiple deposition devices in accordance with an illustrative embodiment.
Figure 9 is a flow diagram of a method of producing a three-dimensional object in accordance with an illustrative embodiment.
Figure 10 is a block diagram of a computing device in accordance with an illustrative embodiment.

The foregoing and other features of the present disclosure will become apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through use of the accompanying drawings.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the figures, can be arranged, substituted, combined, and designed in a wide variety of different configurations, all of which are explicitly contemplated and make part of this disclosure.

Additive manufacturing includes processes that manufacture an object by fusing successive layers of material together. Such processes include three-dimensional (3D) printing processes. In some instances, objects can be made by extruding molten plastic from a printing head. The molten plastic cools and attaches to a lower layer (e.g., a base layer or a previous layer of extruded plastic). Because plastic has a relatively low melting point, the cooling of the molten plastic is relatively quick and can be accomplished by moving air over the plastic (e.g., via natural movements of air). As such, the molten plastic can air-cool without harming the existing plastic.

However, when the material used to create the object has a relatively high melting point, cooling of the molten material may cause issues. For example, some additive manufacturing processes use welding techniques to liquefy metal and deposit the metal onto a base material or a previously-deposited metal. The relatively high temperatures used to liquefy the metal can cause issues with the object being manufactured. For example, high heat (e.g., caused by prolonged welding) can distort the object due to thermal expansion. In one example, a portion of the object at a high temperature expands differently than another portion of the object having a lower temperature. Similarly, depositing metal on layers at different temperatures can add stress or distortion to the material. For example, the beginning of a bead of metal applied to a base material may be applied when the base material is relatively cool (e.g., exhibiting low thermal expansion) but the end of the bead of metal can be applied when the base material has been heated via the metal deposition process (e.g., exhibiting high thermal expansion). When the object cools, the object can have inherent stresses caused by the differences in the thermal expansion. Due to such stresses, the object can develop fractures or can fail prematurely.

In an illustrative embodiment, stresses and distortion within the three-dimensionally printed object are reduced by using two or more welding torches or other metal deposition devices. By using multiple welding torches, the object is printed faster. Accordingly, there is a smaller thermal gradient from the beginning of the deposition of a layer to the end of the deposition of the layer than if a single welding torch laid the same amount of metal. That is, increasing the deposition rate by using multiple deposition devices decreases distortion of the object.

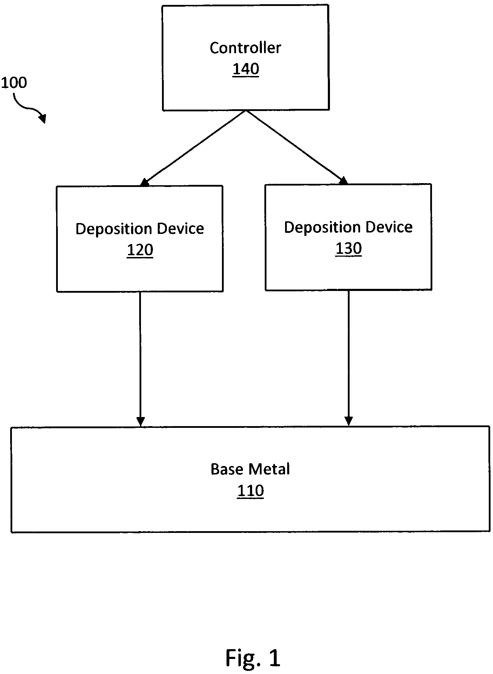

Figure 1 is a block diagram of a three-dimensional printing system with multiple deposition devices in accordance with an illustrative embodiment. A metal additive system 100 includes a first deposition device 120, a second deposition device 130, a base metal 110, and a controller 140. In alternative embodiments, additional, fewer, and/or different elements may be used.

The first deposition device 120 and the second deposition device 130 can be any suitable metal deposition devices. For example, the first deposition device 120 and the second deposition device 130 can include arc welding devices, gas metal arc welding (GMAW) devices, metal inert gas (MIG) welding devices, tungsten inert gas (TIG) welding devices, laser metal deposition devices, laser hotwire welding devices, blown powder direct laser deposition (DLD) devices, or any other suitable device. In some instances, the first deposition device 120 and the second deposition device 130 are the same type of metal deposition devices (e.g., both arc welding devices). In other embodiments, the first deposition device 120 and the second deposition device 130 may be different types of metal deposition devices.

As shown in Figure 1, the first deposition device 120 and the second deposition device 130 apply metal layers to a base metal 110. The base layer 110 can be any suitable metal base onto which the first deposition device 120 and the second deposition device 130 apply layers of metal in a 3D printing method. The base layer 110 can be, for example a piece of metal plating, sheet metal, or any other suitable piece of metal upon which layers of metal can be deposited. The base layer 110 can be any suitable metal, such as iron, steel, stainless steel, aluminum, titanium, etc. The base metal 110 can be any suitable shape for the object that is to be printed. In an illustrative embodiment, the first deposition device 120 moves independently from the second deposition device 130. In such an embodiment, the first deposition device 120 can deposit metal in a pattern that is different than the second deposition device 120. Although various embodiments described herein relate to a system with two deposition devices that work simultaneously, alternative embodiments can include three or more deposition devices that work simultaneously.

The controller 140 can be operatively coupled to the first deposition device 120 and the second deposition device 130. For example, the controller 140 can cause the first deposition device 120 to weld a first pattern on the base metal 110 while simultaneously causing the second deposition device 130 to weld a second pattern on the base metal 110. The controller 140 can include any suitable computing device, automation components, power regulators, etc., to control the first deposition device 120 and the second deposition device 130. For example, the controller 140 can selectively cause the first deposition device 120 (and/or the second deposition device 130) to deposit metal and can control the movement of the first deposition device 120 (and/or the second deposition device 130) in a three-dimensional area. In alternative embodiments, any suitable three-dimensional metal deposition controller may be used.

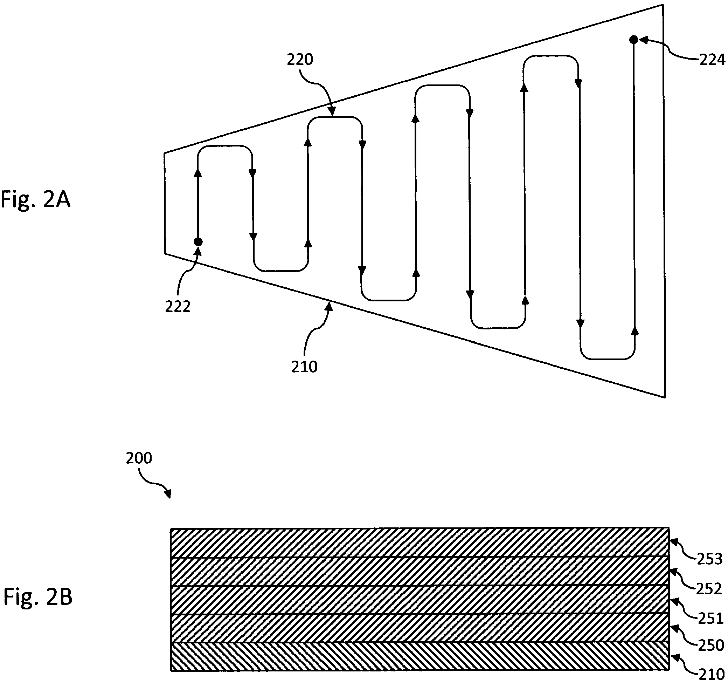

Figure 2A is a diagram illustrating a deposition path of a three-dimensional printing system in accordance with an illustrative embodiment. In Figure 2A, a base layer 210 is in the shape of a trapezoid. In alternative embodiments, any suitable shape can be used. A deposition path 220 includes a starting point 222 and an ending point 224. The arrows of the deposition path 220 indicate a direction in which a metal deposition device continuously applies a bead of metal. In the embodiment shown in Figure 2A, the raster shape of the deposition path 220 across the trapezoidal shape of the base layer 210 will, after deposition of material along the deposition path 220, increase the height of the object, thereby producing a trapezoidal prism. In alternative embodiments, the deposition path 220 can be any suitable shape or pattern. For example, the deposition path 220 can run around the edges of the base layer 210 to form a hollow object. Similarly, the width between parallel beads can be narrowed or widened based on any suitable parameter, such as the width of the meal bead formed by the metal deposition device and the desired shape or consistency of the object to be printed.

In an illustrative embodiment, the first deposition device 120 can run a bead of metal along the deposition path 220. Once the first deposition device 120 has made some progress (e.g., two or more passes along the width of the base metal 110), the second deposition device 130 can begin making a second layer along the deposition path 220 on top of the metal deposited by the first deposition device 120. In such an embodiment, the first deposition device 120 and the second deposition device 130 can deposit metal simultaneously, but at different locations along the deposition path 220.

Figure 2B is an elevation view of a three-dimensionally printed object printed using the deposition path of Figure 2A in accordance with an illustrative embodiment. A 3D object 200 includes the base layer 210, a first layer 250, a second layer 251, a third layer 252, and a fourth layer 253. In alternative embodiments, additional, fewer, and/or different elements may be used. For example, more or less than four layers may be applied to the base layer 210. In the embodiment described above in which two layers are deposited simultaneously, the first metal deposition device 120 can apply the first layer 250 to the base layer 210 while the second metal deposition device 120 applies the second layer 251 to the first layer 250.

In some instances, the deposition path 220 may be long enough that the heat used to deposit (e.g., weld) metal to the base layer 210 is enough to significantly heat the base layer 210, thereby distorting the base layer 210 via thermal expansion and/or creating stresses within the first layer 250 (or any other suitable layer) or between the first layer 250 and the base layer 210. To compensate for such an eventuality, the deposition path 220 may be broken up into two or more deposition paths that reduce the time it takes to apply the first layer 250.

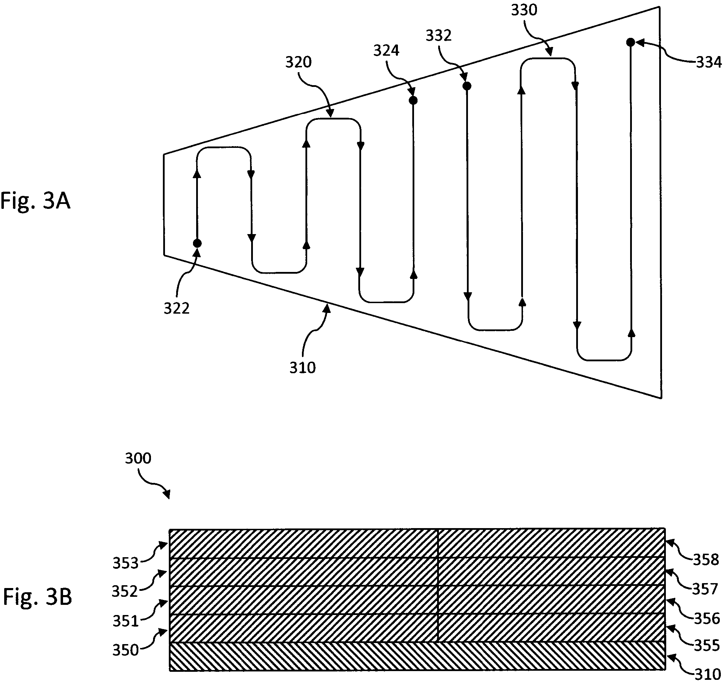

Figure 3A is a diagram illustrating two deposition paths of a three-dimensional printing system with multiple deposition devices in accordance with an illustrative embodiment. A first deposition path 320 includes a first starting point 322 and a first ending point 324. A second deposition path 330 includes a second starting point 332 and a second ending point 334. The arrows in the first deposition path 320 and the second deposition path 330 indicate the direction that the respective deposition device follows. In the embodiment illustrated in Figure 3A, the first deposition path 320 and the second deposition path 330 travel in the same direction (e.g., from left to right). That is, the first deposition path 320 begins at an outer portion (e.g., the left side) of the base layer 210 and ends at an inner portion (e.g., near the middle) of the base layer 210, and the second deposition path 330 begins at an inner portion (e.g., near the middle) of the base layer 210 and ends at an outer portion (e.g., the right side) of the base layer 210.

In the embodiment shown in Figure 3A, the first ending point 324 is adjacent to the second starting point 332. In alternative embodiments, any suitable pattern can be used. For example, the second starting point 332 and the second ending point 334 are at the top of Figure 3A. In alternative embodiments, the second starting point 332 and the second ending point 334 can be located at the bottom of Figure 3A such that the second ending point 332 is adjacent to a portion of the first deposition path 320 (e.g., adjacent to the last leg of the raster shape of the first deposition path 320). Similarly, the first ending point 324 can be adjacent to a portion of the second deposition path 330 (e.g., adjacent to the first leg of the raster shape of the second deposition path 330).

In the embodiment shown in Figure 3A, the first deposition device 120 can travel along the first deposition path 320, and the second deposition device 130 simultaneously travels along the second deposition path 330. Thus, the area of the base layer 210 is covered in a first layer in half of the time that it would take a single deposition device to cover the area of the base layer 210 (e.g., via the deposition path 220 of Figure 2A). By reducing the amount of time it takes to deposit a layer on the base layer 310, the amount of thermal expansion and/or deformation can be reduced, thereby reducing internal stress of the printed object.

In the embodiment shown in Figure 3A, the printed 3D object is not a shape that will cool uniformly. For example, the left side of the base layer 210 of Figure 3A (e.g., corresponding to the first deposition path 320) is narrower than the right side of the base layer 210 (e.g., corresponding to the second deposition path 330). Accordingly, the left side cools (and heats) faster than the right side. In an illustrative embodiment, the temperature of the object corresponding to the respective deposition path can be monitored, and another layer is deposited after the temperature of the object falls below a threshold temperature. In such an embodiment, each side of the object can be deposited independently depending on the temperature of the respective side of the object (and the final shape of the object) to minimize thermal gradients of the object.

Figure 3B is an elevation view of a three-dimensionally printed object printed using the deposition paths of Figure 3A in accordance with an illustrative embodiment. A 3D object 300 includes the base layer 310, a first layer including a first portion 350 and a second portion 355, a second layer including a first portion 351 and a second portion 356, a third layer including a first portion 352 and a second portion 357, and a fourth layer including a first portion 353 and a second portion 358. In an illustrative embodiment, the first portion 350 of the first layer is deposited by the first deposition device 120 and the second portion 355 of the first layer is deposited by the second deposition device 130. Similarly, the first portion 351 of the second layer is deposited by the first deposition device 120 and the second portion 356 of the second layer is deposited by the second deposition device 130. In an illustrative embodiment, the 3D object 300 is cooled (e.g., to about room temperature) between deposition of the layers. Thus, the temperature swings of the 3D object 300 are reduced compared to a constant deposition printing method.

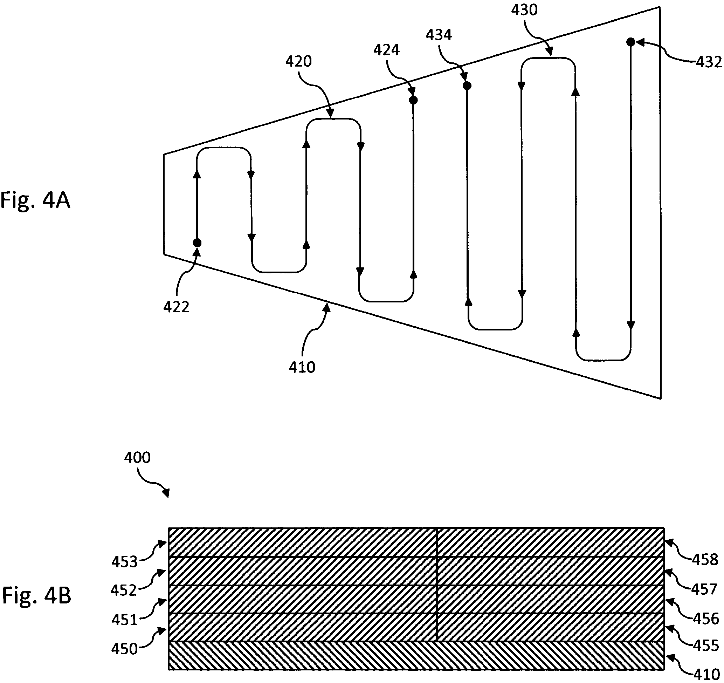

Figure 4A is a diagram illustrating two deposition paths of a three-dimensional printing system with multiple deposition devices in accordance with an illustrative embodiment. A first deposition path 420 includes a first starting point 422 and a first ending point 424. A second deposition path 430 includes a second starting point 432 and a second ending point 434. The arrows in the first deposition path 420 and the second deposition path 430 indicate the direction that the respective deposition device follows. In the embodiment illustrated in Figure 4A, the first deposition path 420 and the second deposition path 430 travel in opposite directions (e.g., from an outside edge towards the center of the base layer 410). In such an embodiment, the first ending point 424 and the second ending point 434 are near one another. In such an embodiment, the two ends can be fused together such that the end result is similar to the layer deposited via the deposition path 220 of Figure 2A. In an alternative embodiment, the first deposition path 320 and the second deposition path 430 travel in directions opposite of that shown in Figure 4A (e.g., from the center towards the outside edge of the base layer 410).

Figure 4B is an elevation view of a three-dimensionally printed object printed using the deposition paths of Figure 4A in accordance with an illustrative embodiment. A 3D object 400 includes the base layer 410, a first layer including a first portion 450 and a second portion 455, a second layer including a first portion 451 and a second portion 456, a third layer including a first portion 452 and a second portion 457, and a fourth layer including a first portion 453 and a second portion 458. In an illustrative embodiment, the first portion 450 of the first layer is deposited by the first deposition device 120 and the second portion 455 of the first layer is deposited by the second deposition device 130. Similarly, the first portion 451 of the second layer is deposited by the first deposition device 120 and the second portion 456 of the second layer is deposited by the second deposition device 130.

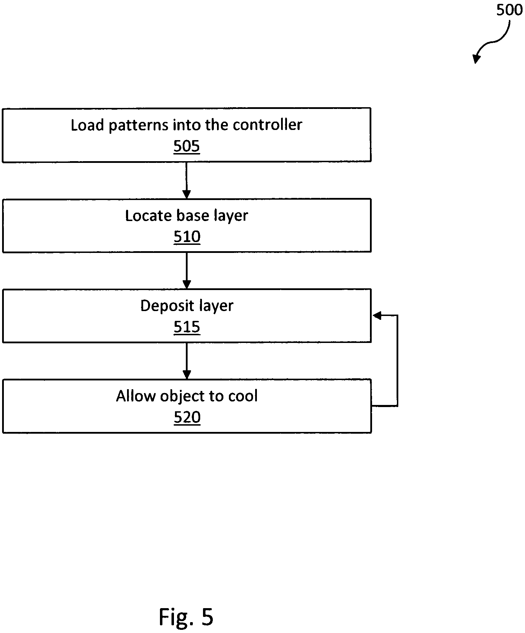

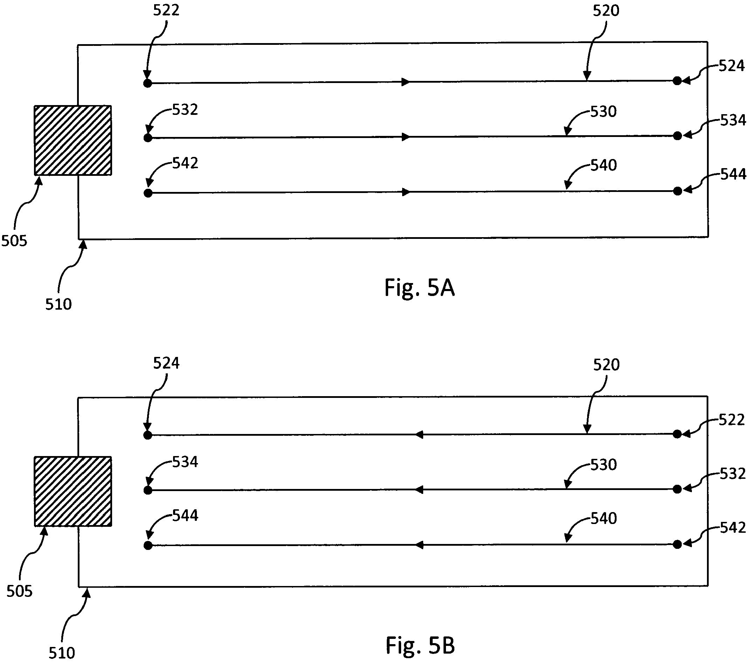

Figures 5A, 5B, 6A, 6B, and 7 are diagrams and a chart that explains and shows the results of an experiment. Figures 5A and 5B are diagrams illustrating multiple deposition paths of a three-dimensional printing system with a single deposition device in accordance with an illustrative embodiment. In an illustrative embodiment, deposition paths 520, 530, and 540 are used to deposit metal on the base layer 510. The arrows along the deposition paths 520, 530, and 540 indicate the direction of the deposition device along the paths. The deposition paths 520, 530, and 540 include starting points 522, 532, and 542, respectively, and ending points 524, 534, and 544, respectively. Figures 5A and 5B are similar, but the deposition paths 520, 530, and 540 in Figure 5A move away from the clamp 505, whereas the deposition paths 520, 530, and 540 in Figure 5A move toward the clamp 505. In alternative embodiments, additional, fewer, and/or different elements may be used.

In an illustrative embodiment, a deposition device travels along each of the deposition paths 520, 530, and 540 sequentially. The clamp 505 holds the base layer 510 in a stationary position, while the opposite end of the base layer 510 is free-floating. That is, only one end of the base layer 510 is restricted in motion. As the base layer 510 (and any layers of deposited metal) heats and cools, the base layer 510 can become deformed. For example, the unclamped end of the base layer 510 can move vertically (e.g., orthogonal to the side of the base layer 510 that metal is deposited). Once a first layer is deposited (e.g., along the deposition paths 620, 630, 640, 660, 670, and 680) covering the surface of the base layer 610, subsequent layers can be deposited using the same deposition paths.

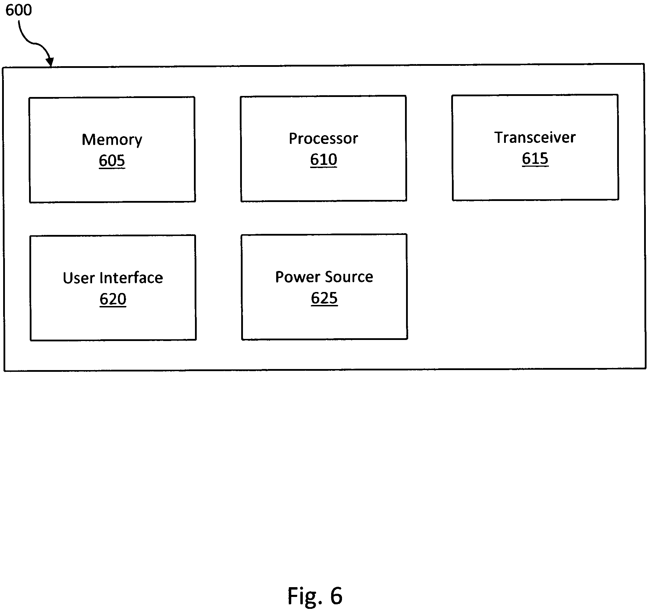

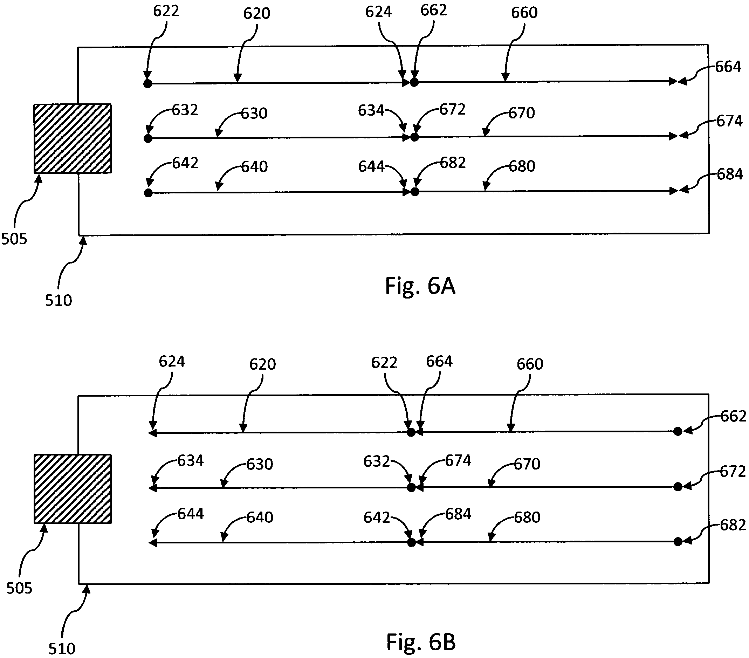

Figures 6A and 6B are diagrams illustrating multiple deposition paths of a three-dimensional printing system with multiple deposition devices in accordance with an illustrative embodiment. In an illustrative embodiment, deposition paths 620, 630, 640, 660, 670, and 680 are used to deposit metal on the base layer 510. The arrows along the deposition paths 620, 630, 640, 660, 670, and 680 indicate the direction of the deposition device along the paths. The deposition paths 620, 630, 640, 660, 670, and 680 include starting points 622, 632, 642, 662, 672, and 682, respectively, and ending points 624, 634, 644, 664, 674, and 684, respectively. Figures 6A and 6B are similar to Figures 5A and 5B, but for use with multiple deposition devices simultaneously.

In an illustrative embodiment, a first deposition device deposits metal along the deposition path 620 while a second deposition device simultaneously deposits metal along the deposition path 660. Subsequently, the first deposition device deposits metal along the deposition path 630 while the second deposition device simultaneously deposits metal along the deposition path 670. Similarly, the first and second deposition devices simultaneously deposit metal along the deposition paths 640 and 680. Once a first layer is deposited (e.g., along the deposition paths 620, 630, 640, 660, 670, and 680) covering the surface of the base layer 610, subsequent layers can be deposited using the same deposition paths.

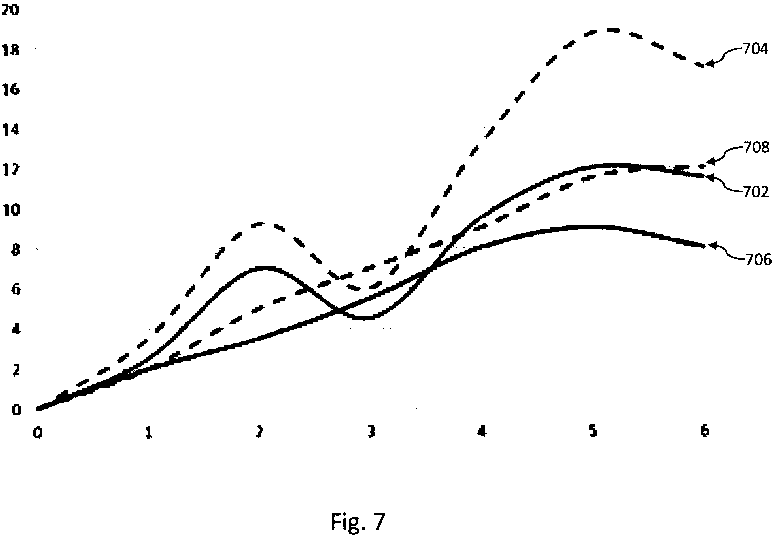

Figure 7 is a graph showing distortion of the base using the deposition paths of Figures 5A, 5B, 6A, and 6B in accordance with an illustrative embodiment. The graph of Figure 7 plots the amount of distortion in the vertical direction of the unclamped end of the base layer 510 along the y-axis against the number of passes deposited along the x-axis. Line 702 corresponds to distortion caused by depositing material along the deposition paths of Figure 5A (i.e., using a single deposition device with paths away from the clamp 505), line 704 corresponds to distortion caused by depositing material along the deposition paths of Figure 5B (i.e., using a single deposition device with paths toward the clamp 505), line 706 corresponds to distortion caused by depositing material along the deposition paths of Figure 6A (i.e., using two deposition devices with paths away from the clamp 505), and line 708 corresponds to distortion caused by depositing layers via the deposition paths of Figure 6B (i.e., using two deposition devices with paths toward the clamp 505). Passes 1, 2, and 3 of Figure 7 correspond to a first layer of metal being deposited onto the base layer, and passes 4, 5, and 6 correspond to a second layer of metal deposited over the first layer.

As shown in Figure 7, using two deposition devices simultaneously generally results in less deformation than if a single deposition device is used. Also, when two deposition devices are used simultaneously, the amount of distortion is more regular and predictable than when a single deposition device is used. That is, the slopes of the lines 706 and 708 (i.e., corresponding to using multiple deposition devices) are more consistent than the slopes of the lines 702 and 704 (i.e., corresponding to using a single deposition device). A predictable amount of distortion can be helpful in predicting and controlling the variance in the distance between the deposition device and the base layer 510. In general, the deposition path of Figure 6A, corresponding to line 706, has the least amount of distortion after several layers are deposited.

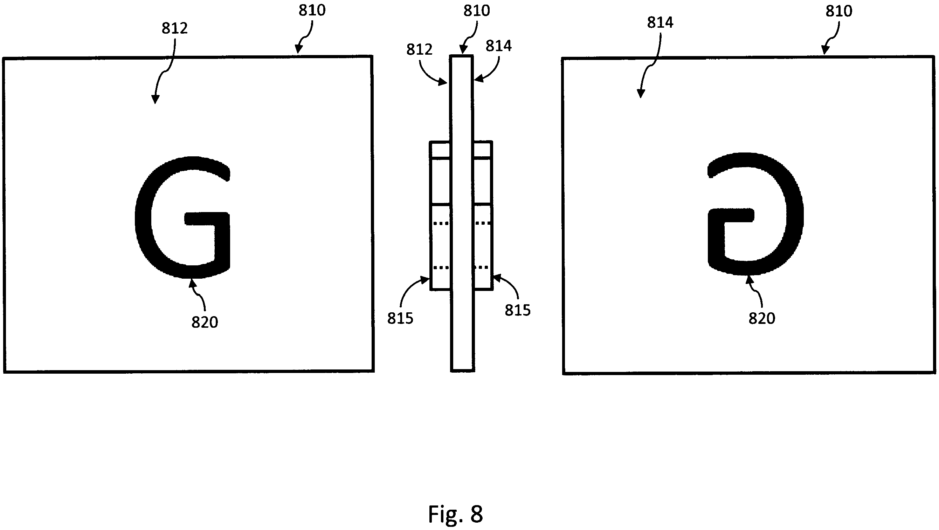

Figure 8 is a diagram illustrating multiple, mirrored deposition paths of a three-dimensional printing system with multiple deposition devices in accordance with an illustrative embodiment. A base plate 810 includes a first side 812 and a second side 814. In the embodiment illustrated in Figure 8, the first side 812 and the second side 814 are opposite sides of the base plate 810. A first layer 815 is deposited on each side of the base plate 810 along the deposition path 820. In alternative embodiments, additional, fewer, and/or different elements may be used.

As shown in Figure 8, the deposition path 820 is in a "G" shape on the first side 812 and a backwards "G" shape on the second side 814. That is, the deposition path 820 is mirrored such that the shape of the deposition path 820 traverses the same shape along a plane that is parallel to the first side 812 and the second side 814. In an illustrative embodiment, one or more deposition devices deposit material along the deposition path 820 simultaneously. The deposition devices can traverse the deposition path 820 in any suitable direction, such as the same direction or opposite directions. The deposition devices can travel at the same speed along the deposition path 820. Although the deposition path 820 has a "G" shape in the embodiment illustrated in Figure 8, any other suitable shape or pattern can be used.

By depositing material simultaneously along mirrored paths, the amount of distortion can be reduced when compared to depositing each side independently. For example, by heating and cooling the base plate 810 evenly on both sides, distortions caused by uneven heating and cooling are counteracted. In some instances, the counteracting stresses cancel one another out and there is approximately no net stress. Accordingly, depositing material simultaneously using mirrored paths can result in little to no distortion in the base plate 810 and the final product.

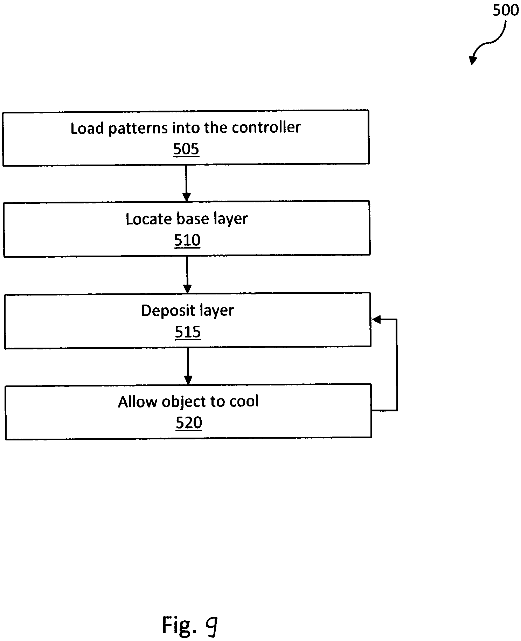

Figure 5 (fig. 9) is a flow diagram of a method of producing a three-dimensional object in accordance with an illustrative embodiment. In alternative embodiments, additional, fewer, and/or different operations may be used. Also, the use of a flow chart and arrows is not meant to be limiting with respect to the order or flow of operations. For example, in alternative embodiments, two or more operations may be performed simultaneously.

In an operation 505, patterns are loaded into a controller, such as the controller 140. The patterns can be determined via any suitable method. For example, a user can develop patterns for printing a particular object and load the patterns into the controller. In an alternative embodiment, specifications for an object (e.g., dimensions) can be uploaded to the controller, and the controller can determine patterns for the particular layers.

In an operation 510, a base layer is located. In an illustrative embodiment, the base layer is placed (e.g., via a user or a robotic arm) within an apparatus that holds the base layer in place. The operation 510 can include using one or more sensors that detect the location of the base layer. In alternative embodiments, the location of the base layer with respect to a reference point (e.g., the location of one or more deposition devices) is communicated to the controller. For example, the location of the base layer is transmitted to the controller with the patterns (e.g., in the operation 505).

In an operation 515, a layer is deposited using two or more deposition devices. In an illustrative embodiment, the controller controls the location of the two or more deposition devices within a three-dimensional area. For example, the deposition devices can be located within a structure that allows each of the deposition devices to move simultaneously and independently. In one example, the deposition devices are located on the end of robotic arms. In an illustrative embodiment, each of the deposition devices moves independently with respect to one another in a two-dimensional plane, and the deposition devices move together in the third dimension (e.g., up and down). Alternatively, the deposition devices can move independently in all three dimensions. In alternative embodiments, any suitable structure for moving the deposition devices can be used.

In an illustrative embodiment, the operation 515 includes depositing a first layer onto the base layer (e.g., a metal plate of suitable size and shape). In an operation 520, the object (e.g., the base layer and any deposited layers) is allowed to cool. That is, during deposition of the metal (e.g., via welding), the object may heat up. As discussed above, using two or more deposition devices simultaneously can result in quicker deposition of a layer with a lower thermal gradient. In an illustrative embodiment, some or all of the heat in the object caused by the deposition of metal can be dissipated before a subsequent layer is deposited. The object can be cooled using any suitable method, such as submerging the object in a coolant, spraying a coolant onto the object, blowing air across the surface of the object, allowing the object to dissipate heat into its environment, etc. In some embodiments, the operation 520 is not performed. In an illustrative embodiment, once the material is deposited onto the base layer, the object may be machined (e.g., material can be removed from the object) or the object may be heat treated.

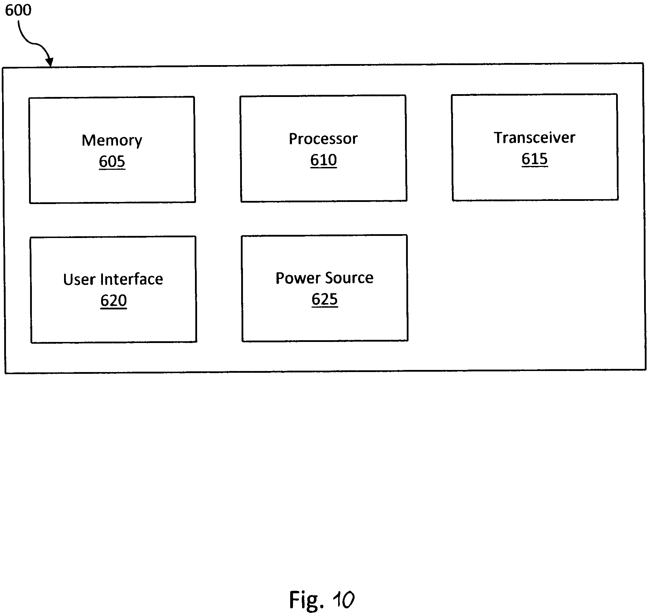

Figure 6 (fig. 10) is a block diagram of a computing device in accordance with an illustrative embodiment. An illustrative computing device 600 includes a memory 605, a processor 610, a transceiver 615, a user interface 620, and a power source 625. In alternative embodiments, additional, fewer, and/or different elements may be used. The computing device 600 can be any suitable device described herein such as the controller 140. For example, the computing device 600 can be a desktop computer, a laptop computer, a smartphone, a specialized computing device, etc. The computing device 600 can be used to implement one or more of the methods described herein.

In an illustrative embodiment, the memory 605 is an electronic holding place or storage for information so that the information can be accessed by the processor 610. The memory 605 can include, but is not limited to, any type of random access memory (RAM), any type of read only memory (ROM), any type of flash memory, etc. such as magnetic storage devices (e.g., hard disk, floppy disk, magnetic strips, etc.), optical disks (e.g., compact disk (CD), digital versatile disk (DVD), etc.), smart cards, flash memory devices, etc. The computing device 600 may have one or more computer-readable media that use the same or a different memory media technology. The computing device 600 may have one or more drives that support the loading of a memory medium such as a CD, a DVD, a flash memory card, etc.

In an illustrative embodiment, the processor 610 executes instructions. The instructions may be carried out by a special purpose computer, logic circuits, or hardware circuits. The processor 610 may be implemented in hardware, firmware, software, or any combination thereof. The term "execution" is, for example, the process of running an application or the carrying out of the operation called for by an instruction. The instructions may be written using one or more programming language, scripting language, assembly language, etc. In an illustrative embodiment, the instructions include one or more deposition paths or patterns that a deposition device is to deposit material. The processor 610 executes an instruction, meaning that it performs the operations called for by that instruction. The processor 610 operably couples with the user interface 620, the transceiver 615, the memory 605, etc. to receive, to send, and to process information and to control the operations of the computing device 600. The processor 610 may retrieve a set of instructions from a permanent memory device such as a ROM device and copy the instructions in an executable form to a temporary memory device that is generally some form of RAM. An illustrative computing device 600 may include a plurality of processors that use the same or a different processing technology. In an illustrative embodiment, the instructions may be stored in memory 605.

In an illustrative embodiment, the transceiver 615 is configured to receive and/or transmit information. In some embodiments, the transceiver 615 communicates information via a wired connection, such as an Ethernet connection, one or more twisted pair wires, coaxial cables, fiber optic cables, etc. In some embodiments, the transceiver 615 communicates information via a wireless connection using microwaves, infrared waves, radio waves, spread spectrum technologies, satellites, etc. The transceiver 615 can be configured to communicate with another device using cellular networks, local area networks, wide area networks, the Internet, etc. In some embodiments, one or more of the elements of the computing device 600 communicate via wired or wireless communications. In some embodiments, the transceiver 615 provides an interface for presenting information from the computing device 600 to external systems, users, or memory. For example, the transceiver 615 may include an interface to a display, a printer, a speaker, etc. In an illustrative embodiment, the transceiver 615 may also include alarm/indicator lights, a network interface, a disk drive, a computer memory device, etc. In an illustrative embodiment, the transceiver 615 can receive information from external systems, users, memory, etc. In some embodiments, the transceiver 615 includes one or more inputs or outputs for controlling movement of two or more metal deposition devices. For example, the transceiver 615 can include inputs for temperature sensors, position sensors, etc. for analyzing a three-dimensional area in which an object is printed. In another example, the transceiver 615 includes outputs for controlling conditions within the three-dimensional area such as the location of deposition devices (e.g., via servo motors, pistons, or other actuators), whether the deposition devices are active (e.g., depositing metal), cooling mechanisms (e.g., jets of coolant), etc.

In an illustrative embodiment, the user interface 620 is configured to receive and/or provide information from/to a user. The user interface 620 can be any suitable user interface. The user interface 620 can be an interface for receiving user input and/or machine instructions for entry into the computing device 600. The user interface 620 may use various input technologies including, but not limited to, a keyboard, a stylus and/or touch screen, a mouse, a track ball, a keypad, a microphone, voice recognition, motion recognition, disk drives, remote controllers, input ports, one or more buttons, dials, joysticks, etc. to allow an external source, such as a user, to enter information into the computing device 600. The user interface 620 can be used to navigate menus, adjust options, adjust settings, adjust display, etc. For example, the user interface 620 can be used to input deposition paths or a shape of an object to be printed. In an illustrative embodiment, the user interface 620 can be used to control the location of the deposition devices, whether coolant is applied to the object, etc.

The user interface 620 can be configured to provide an interface for presenting information from the computing device 600 to external systems, users, memory, etc. For example, the user interface 620 can include an interface for a display, a printer, a speaker, alarm/indicator lights, a network interface, a disk drive, a computer memory device, etc. The user interface 620 can include a color display, a cathode-ray tube (CRT), a liquid crystal display (LCD), a plasma display, an organic light-emitting diode (OLED) display, etc.

In an illustrative embodiment, the power source 625 is configured to provide electrical power to one or more elements of the computing device 600. In some embodiments, the power source 625 includes an alternating power source, such as available line voltage (e.g., 120 Volts alternating current at 60 Hertz in the United States). The power source 625 can include one or more transformers, rectifiers, etc. to convert electrical power into power useable by the one or more elements of the computing device 600, such as 1.5 Volts, 8 Volts, 12 Volts, 24 Volts, etc. The power source 625 can include one or more batteries.

In an illustrative embodiment, any of the operations described herein can be implemented at least in part as computer-readable instructions stored on a computer-readable memory. Upon execution of the computer-readable instructions by a processor, the computer-readable instructions can cause a node to perform the operations.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or inter-medial components. Likewise, any two components so associated can also be viewed as being "operably connected," or "operably coupled," to each other to achieve the desired functionality, and any two components capable of being so associated can also be viewed as being "operably couplable," to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, unless otherwise noted, the use of the words "approximate," "about," "around," "substantially," etc., mean plus or minus ten percent.

The foregoing description of illustrative embodiments has been presented for purposes of illustration and of description. It is not intended to be exhaustive or limiting with respect to the precise form disclosed, and modifications and variations are possible in light of the above teachings or may be acquired from practice of the disclosed embodiments. It is intended that the scope of the invention be defined by the claims appended hereto and their equivalents.

**REFERENCE NUMBERS**

| | | | |
|---|---|---|---|
| 100 | system | 424 | point |
| 110 | base metal | 430 | second deposition path |
| 120 | device | 432 | point |
| 130 | device | 450 | first portion |
| 140 | controller | 451 | first portion |
| 200 | object | 452 | first portion |
| 210 | base layer | 453 | first portion |
| 220 | path | 455 | second portion |
| 222 | starting point | 456 | second portion |
| 224 | ending point | 457 | second portion |
| 250 | first layer | 458 | second portion |
| 251 | second layer | 505 | clamp |
| 252 | third layer | 510 | base layer |
| 253 | fourth layer | 520 | path |
| 310 | baser layer | 522 | point |
| 320 | path | 524 | point |
| 322 | point | 530 | path |
| 324 | point | 532 | point |
| 330 | path | 534 | point |
| 332 | point | 540 | path |
| 334 | point | 542 | point |
| 350 | first portion | 544 | point |
| 351 | first portion | 610 | base layer |
| 352 | first portion | 620 | path |
| 353 | first portion | 622 | point |
| 355 | second portion | 624 | point |
| 356 | second portion | 630 | path |
| 357 | second portion | 632 | point |
| 358 | second portion | 634 | point |
| 400 | object | 640 | path |
| 410 | base layer | 642 | point |
| 420 | first deposition path | 644 | point |
| 422 | point | 660 | path |
| 662 | point | 815 | first layer |
| 664 | point | 820 | path |
| 670 | path | 905 | operation |
| 672 | point | 910 | operation |
| 674 | point | 915 | operation |
| 680 | path | 920 | operation |
| 682 | point | 1000 | device |
| 684 | point | 1005 | memory |
| 702 | line | 1010 | processor |
| 704 | line | 1015 | transceiver |
| 706 | line | 1020 | interface |
| 708 | line | 1025 | power source |
| 810 | base plate | | |
| 812 | first side | | |
| 814 | second side | | |

## Claims

1. A method for three-dimensional printing comprising:
depositing, via a first metal deposition device, first metal on a base along a first path; and
simultaneously depositing, via a second metal deposition device, second metal on the base along a second path to form a three-dimensional structure, wherein the three-dimensional structure includes the first metal along the first path and the second metal along the second path,
wherein a first end of the first path is adjacent to a first end of the second path, and
wherein the first metal deposition device moves independently from the second metal deposition device.

2. The method of claim 1, wherein said depositing the first metal along the first path comprises depositing the first metal continuously along the first path, and wherein said depositing the second metal along the second path comprises depositing the second metal continuously along the second path.

3. The method of claim 1 or 2, wherein a portion of the first metal at the first end of the first path is the last of the first metal deposited, and wherein a portion of the second metal at the first end of the second path is the first of the second metal deposited.

4. The method of any of the claims 1 to 3, wherein the first path is along a first portion of the base, wherein the second path is along a second portion of the base, and wherein the first portion and the second portion do not overlap, and/or
wherein the first path begins at a first outer portion of the base and ends at a first inner portion of the base, and wherein the second path begins at a second inner portion of the base and ends at a second outer portion of the base, and/or
wherein the first path begins at a first outer portion of the base and ends at a first inner portion of the base, and wherein the second path begins at a second outer portion of the base and ends at a second inner portion of the base.

5. The method of any of the claims 1 to 4, wherein the first metal deposition device comprises a first welding device, and wherein the second metal deposition device comprises a second welding device, and/or
wherein the first metal deposition device comprises a first wire deposition device, and wherein the second metal deposition device comprises a second wire deposition device, and/or
wherein the first metal deposition device comprises a first laser welding device, and wherein the second metal deposition device comprises a second laser welding device.

6. The method of any of the claims 1 to 5, wherein the first metal deposition device and the second metal deposition device are a same type of metal deposition device.

7. A three-dimensional printing device comprising:
a first metal deposition device (120) configured to deposit first metal on a base (110);
a second metal deposition device (130) configured to deposit second metal on the base (110), wherein the first metal deposition device (120) moves independently from the second metal deposition device (130); and
a controller (140) operatively coupled to the first metal deposition device (120) and the second metal deposition device (130), wherein the controller (140) is configured to:
cause the first metal deposition device to (120) deposit the first metal along a first path; and
simultaneously cause the second metal deposition device (130) to deposit the second metal along a second path to form a three-dimensional structure, wherein the three-dimensional structure includes the first metal along the first path and the second metal along the second path, and wherein a first end of the first path is adjacent to a first end of the second path.

8. The three-dimensional printing device of claim 7, wherein the first metal deposition device (120) is configured to continuously deposit the first metal along the first path, and wherein the second metal deposition device (130) is configured to continuously deposit the second metal along the second path.

9. The three-dimensional printing device of claim 7 or 8, wherein a portion of the first metal at the first end of the first path is the last of the first metal deposited, and wherein a portion of the second metal at the first end of the second path is the first of the second metal deposited.

10. The three-dimensional printing device of any of the claims 7 to 9, wherein the first path is along a first portion of the base (110), wherein the second path is along a second portion of the base (110), and wherein the first portion and the second portion do not overlap, and/or
wherein the first path begins at a first outer portion of the base and ends at a first inner portion of the base, and wherein the second path begins at a second inner portion of the base and ends at a second outer portion of the base, and/or
wherein the first path begins at a first outer portion of the base and ends at a first inner portion of the base, and wherein the second path begins at a second outer portion of the base and ends at a second inner portion of the base (110).

11. The three-dimensional printing device of any of the claims 7 to 10, wherein the first metal deposition device (120) comprises a first welding device, and wherein the second metal deposition device (130) comprises a second welding device, and/or
wherein the first metal deposition device (120) comprises a first wire deposition device, and wherein the second metal deposition device (130) comprises a second wire deposition device, and/or
wherein the first metal deposition device (120) comprises a first laser welding device, and wherein the second metal deposition device (130) comprises a second laser welding device.

12. The three-dimensional printing device of any of the claims 7 to 11, wherein the first metal deposition device (120) and the second metal deposition device (130) are a same type of metal deposition device.
